# EUROPÄISCHE PATENTSCHRIFT

(11) **EP 2 029 462 B1**
(45) Veröffentlichungstag und Bekanntmachung des Hinweises auf die Patenterteilung: **10.03.2010**
(21) Anmeldenummer: 07711233.2
(22) Anmeldetag: 16.03.2007
(51) Int. Cl.: B65G 67/08

(54) **LADEHILFE UND TELESKOPFÖRDEREINRICHTUNG FÜR FÖRDERGUT, INSBESONDERE FÜR STÜCKGUT, MIT SELBIGER**
LOADING AID AND TELESCOPIC CONVEYING DEVICE FOR GOODS TO BE CONVEYED, IN PARTICULAR FOR PIECE GOODS, HAVING THE FORMER
DISPOSITIF D'AIDE AU CHARGEMENT ET DISPOSITIF DE TRANSPORT TELESCOPIQUE POUR MARCHANDISES A TRANSPORTER, NOTAMMENT POUR MARCHANDISES AU DETAIL, EQUIPE DE CELUI-CI

(30) Priorität: 01.06.2006 DE 102006025640
(43) Veröffentlichungstag der Anmeldung: 04.03.2009
(73) Patentinhaber: Deutsche Post AG, 53113 Bonn (DE)
(72) Erfinder: RITTBERG, Sebastian, 28213 Bremen (DE); ECHELMEYER, Wolfgang, 27711 Osterholz-Scharmbeck (DE); FRANCK, Hermann, 27721 Ritterhude (DE); MIESBAUER, Matthias, 28203 Bremen (DE)
(74) Vertreter: Jostarndt, Hans-Dieter
(86) Internationale Anmeldenummer: PCT/DE2007/000479
(87) Internationale Veröffentlichungsnummer: WO 2007/137542

(56) Entgegenhaltungen:
- EP-A- 1 600 408
- EP-A1- 1 531 136
- DE-U1- 20 202 926
- FR-A- 1 550 633
- FR-A1- 2 644 598
- FR-A1- 2 656 704
- GB-A- 2 251 593
- US-A- 5 015 145
- US-A- 5 325 953
- US-A- 5 718 325

## Beschreibung

Die vorliegende Erfindung betrifft eine Ladehilfe in Form einer auf mindestens drei Rollen, von denen mindestens eine lenkbar ist, verfahrbaren Arbeitsplattform für das Be- und Entladen von Containern sowie eine Teleskopfördereinrichtung für Fördergut, insbesondere für Stückgut, mit einem teleskopartigem Fördermittel zum Transport des Förderguts.

Nach dem heutigen Stand der Technik wird zur Entladung von Stückgut aus Containern ein Förderband in den Container teleskopiert. Stückgüter können darauf abgelegt und zur Weiterbearbeitung aus dem Container befördert werden.

Es gibt Ansätze einer Ladehilfe in Form einer Arbeitsplattform, die durch ihren Antrieb ein Förderband in einen Container zieht, und sowohl Personen als auch Maschinen zur Entladung tragen soll.

Ein Nachteil dieser Lösung ist die angetriebene Arbeitsplattform, die ein spezielles, nicht angetriebenes Förderband voraussetzt. Da im überwiegenden Teil der Stückgut entladenden Betriebe Förderbänder eingesetzt werden, die über einen eigenen Antrieb verfügen, ist diese Lösung nicht praktikabel.

Ein weiteres Problem besteht in der fchlenden Lenkbarkeit der Arbeitsplattform; bei der Rückwärtsbewegung aus einem Container bekommt die auf Rollen fahrende Arbeitsplattform eine Tendenz, sich von Ihrer Laufbahn weg in Richtung einer Containerwand zu bewegen (ähnlich eines KFZ Anhängers beim Rückwärtsfahren).

Die dort entstehenden Kräfte müssen vollständig von der Mechanik des Förderbandes aufgenommen werden. Das Problem wird erheblich verschärft, wenn der Container mit einem Winkelfehler an das Entladetor herangefahren wurde; abhängig von der Größe dieses Winkelfehlers kann allein dies schon eine Lenkung der Arbeitsplattform unumgänglich machen.

Des weiteren besteht das Problem der Entladung von Stückgut aus Bereichen ganz unten sowie ganz oben im Containers, da die Arbeitsplattform nicht dynamisch höhenverstellbar ist Wird die Arbeitsplattform zu hoch gebaut, ist das Entladen von Stückgut am Containerboden sehr unbequem und ergonomisch nicht tragbar. Selbiges Problem tritt auf, wenn die Arbeitsplattform zu niedrig ist und Stückgut von der Containerdecke entladen werden soll.

Häufig werden die Förderbänder, solange sie nicht benötigt werden, von den Entladetoren weg parallel an eine Seite einer Halle gefahren. Sie würden sonst wertvollen Hallenplatz unnötig belegen. Dieses parallele Verfahren der Förderbänder ist mit den bestehenden Lösungen nicht möglich.

Aus der US-Patentschrift US 5,015,145 ist daher beispielsweise eine selbsttätige Ladehilfe zum automatischen Beladen eines Containers bekannt, die eine bewegliche Plattform aufweist. Über berührungslose oder mechanische Sensoren wird erreicht, dass die Vorrichtung beim Bewegen in den und aus dem Container heraus nicht an den Seitenwänden des Containers anstößt.

Ferner offenbart die Französische Patentanrneldung FR 2 644 598 eine selbsttätige Lenkeinrichtung, bei der eine Änderung der Fahrtrichtung durch einen Stromverteiler erreicht wird.

Der Erfindung liegt nun die Aufgabe zugrunde, die obengenannten Lenkungsprobleme zu beseitigen, zumindest aber zu reduzieren.

Erfindungsgemäß wird diese Aufgabe bei der Ladehilfe der eingangs genannten Art dadurch gelöst, daß eine selbsttätige mechanische Lenkeinrichtung zum Lenken der mindestens einen lenkbaren Rolle vorgesehen ist, mittels weller die Arbeitsplattform ohne Berührung einer Wand eines Containers selbsttätig geradeaus gelenkt wird und bei Berührung einer Wand eines Containers selbsttätig von der Wand weggelenkt wird, bis die Arbeitsplattform parallel zur Wand des Containers ausgerichtet ist.

Erfindungsgemäß ist vorgesehen, daß die Lenkeinrichtung mindestens einen mechanischen Berührungsdetektor zur Detektion der Berührung einer Wand eines Containers in Einfarrichtung auf jeder Seite der Arbeitsplattform aufweist.

Erfindungsgemäß ist der Berührungsdetektor so gestaltet, daß er bei Detektion einer Berührung einer Wand eines Containers auf mechanischem Weg eine Änderung der Fahrtrichtung der Arbeitsplattform von der Wand des Containers weg steuert, bis die Abeitsplattform parallel zur Wand des Containers ausgerichtet ist.

Insbesondere ist der der Berührungsdetektor günstigerweise mit der Lenkachse einer lenkbaren Rolle mechanisch verbunden.

Gemäß einer weiteren besonderen Ausführungsform der Erfindung kann vorgesehen sein, daß die Arbeitsplattform eine einzige lenkbare Rolle aufweist, die Lenkeinrichtung genau einen mechanischen Berührungsdetektor zur Detektion der Berührung einer Wand eines Containers in Einfahrrichtung auf der Seite der Arbeitsplattform aufweist und jeder Berührungsdetektor mit der Lenkachse der einzigen lenkbaren Rolle mechanisch verbunden ist

Andererseits kann auch vorgesehen sein, daß die Arbeitsplattform zwei in Einfahrrichtung seitlich nebeneinander im Abstand angeordnete lenkbare Rollen aufweist, deren jeweiligen Lenkachsen mit einem jeweiligen zugehörigen Berührungsdetektor mechanisch verbunden sind. Beispielsweise kann die Arbeitsplattform vier Rollen aufweisen, die im Rechteck oder

Quadrat angeordnet sind, von denen die beiden in Einfahrrichtung vorderen Rollen mittels der selbsttätigen Lenkeinrichtung lenkbar sind. Optimalerweise sind alle vier Rollen lenkbar.

In einer besonders bevorzugten Ausfühnzngsform umfaßt der Berührungsdetektor eine sich im wesentlichen horizontal erstreckende kufenartige Führungsschiene mit zur Arbeitsplattform hin abgebogenen Enden, die über eine sich horizontal erstreckende Befestigungseinrichtung mit der Lenkachse einer jeweiligen zugehörigen lenkbaren Rolle verbunden ist.

Insbesondere kann dabei vorgesehen sein, daß die Führungsschiene mit mindestens einer Rolle versehen ist. Dies kann zur Vermeidung einer Beschädigung einer Wand eines Containers und/oder für einen leichten Lauf sinnvoll sein.

Gemäß einer weiteren besonderen Ausführungsform der Erfindung umfaßt die Befestigungseinrichtung mindestens eine Stange oder ein Rohr.

Vorteilhafterweist ist die Stange bzw. das Rohr linear verstellbar. Eine lineare Verstellbarkeit wird häufig zum Durchfahren von schmalen Ladetoren benötigt und ermöglicht eine Reduzierung der Breite des Gesamtsystems. Die lineare Verstellbarkeit kann über hydraulische Zylinder, Lochstangen, Klemmstangen etc. realisiert werden. Bei der Verwendung von hydraulischen Zylindern kann die Linearverstellung automatisch realisiert werden.

Vorteilhafterweise ist die bzw. wenigstens eine lenkbare Rolle durch eine Feder in einem Zustand ohne Berührung einer Wand eines Containers selbsttägig geradeaus lenkbar.

Alternativ ist auch denkbar, daß die bzw. mindestens eine lenkbare Rolle durch einen Gasdruckzylinder in einem Zustand ohne Berührung einer Wand eines Containers selbsttätig geradeaus lenkbar ist. Es können auch Gummibänder etc. zwischen dem unbeweglichen Teil der Ladehilfe und den beweglichen Elementen der Lenkeinrichtung verwendet werden.

Vorteilhafterweise ist die Arbeitsplattform höhenverstellbar.

Insbesondere kann dabei vorgesehen sein, daß die Arbeitsplattform mittels eines Scherenhebergestänges höhenverstellbar ist.

Vorteilhafterweise ist mindestens ein Fußtaster auf der Arbeitsplattform vorgesehen.

Schließlich kann gemäß einer weiteren besonderen Ausführungsform vorgesehen sein, daß die Ladehilfe einen eigenen Antrieb aufweist.

Des weiteren liefert die vorliegende Erfindung eine Teleskopfördereinrichtung für Fördergut, insbesondere für Stückgut, mit einem teleskopartigen Fördermittel zum Transport des Förderguts und einer damit verbundenen Ladehilfe nach einem der Ansprüche 1 bis 16.

Zweckmäßigerweise ist die Ladehilfe über eine Kupplung mit dem Fördermittel verbunden. Die Kupplung kann lösbar oder auch nicht lösbar sein.

Gemäß einer weiteren besonderen Ausführungsform der Erfindung ist das Fördermittel ein Teleskopförderband.

Gemäß einer besonderen Ausführungsform der Erfindung kann die Ladehilfe keinen eigenen Antrieb aufweisen, sondern von dem Teleskopförderband angetrieben werden.

Gemäß einer besonders bevorzugten Ausführungsform der Erfindung ist die Ladehilfe mittels der Kupplung aus einer Arbeitsposition, in der die Arbeitsplattform an einem in Einfahrrichtung vorderen Ende des Teleskopförderbandes verfahrbar angeordnet ist, in eine Verstauposition verbringbar, in der sich die Arbeitsplattform im Bereich des vorderen Endes des Teleskopförderbandes unterhalb desselben befindet. Damit kann die Ladehilfe gemeinsam mit dem Teleskopförderband verfahren werden.

Schließlich kann vorteilhafterweise vorgesehen sein, daß die Arbeitsplattform in der Verstauposition keinen Bodenkontakt aufweist.

Der Erfindung liegt die überraschende Erkenntnis zugrunde, daß durch die selbsttätige mechanische Lenkeinrichtung eine selbsttätige Lenkung ohne den Einsatz von komplizierter Scan- und Steuerelektronik ermöglicht wird.

Weitere Merkmale und Vorteile der Erfindung ergeben sich aus den Ansprüchen und der nachstehenden Beschreibung, in der ein Ausführungsbeispiel anhand der schematischen Zeichnungen im einzelnen erläutert wird. Dabei zeigt:
- Figur 1: eine Teleskopfördereinrichtung mit einer Ladehilfe gemäß einer besonderen Ausführungsform der Erfindung in Arbeitsposition in schematisierter Seitenansicht;

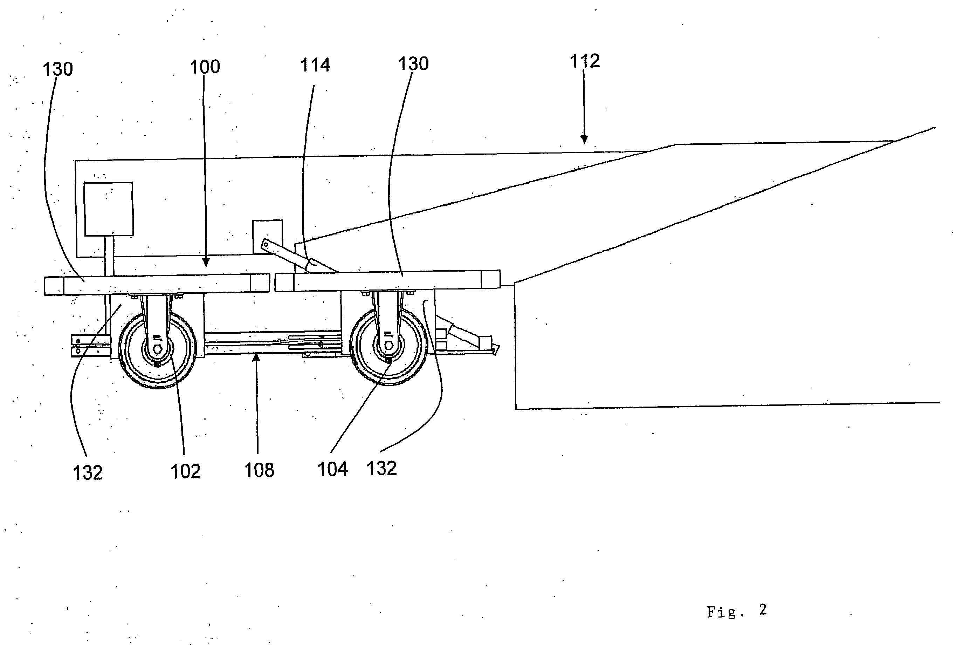

- Figur 2: die Teleskopfördereinrichtung von Figur 1 mit in Verstauposition befindlicher Ladehilfe;
- Figur 3: eine perspektivische Ansicht der Teleskopfördereinrichtung von Figur 1;
- Figur 4: eine Draufsicht der Teleskopfördereinrichtung von Figur 1 beim Einfahren in einen Container;
- Figur 5: eine Draufsicht der Teleskopfördereinrichtung von Figur 1 beim Einfahren in den Container in einem späteren Stadium;
- Figur 6: eine Frontansicht einer lenkbaren Rolle;
- Figur 7: eine Schemadarstellung eines hydraulischen Kupplungssystems; und
- Figuren 8 bis 12: den Ablauf des Verstauens der Ladehilfe in vereinfachter Form.

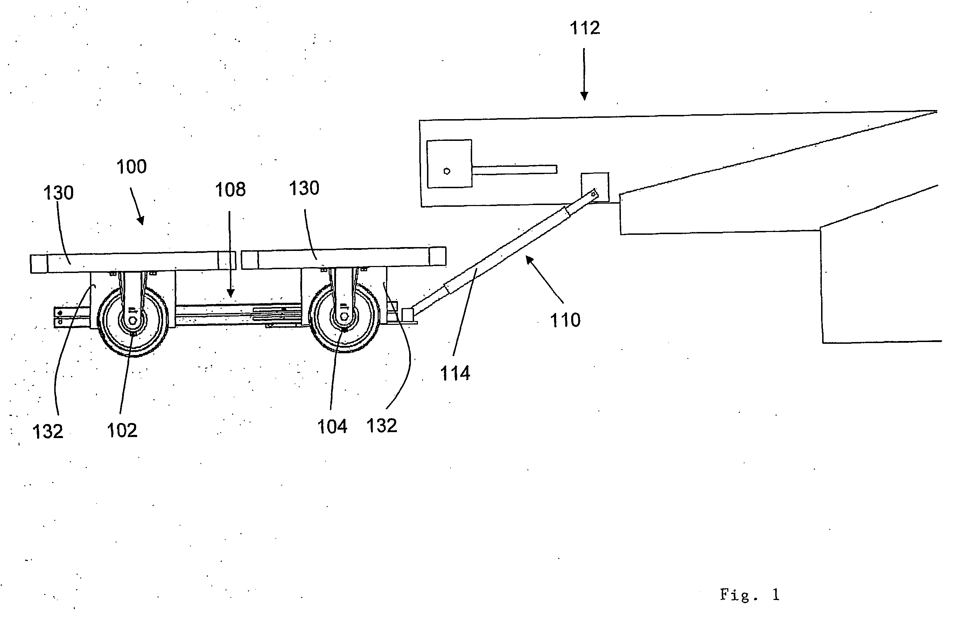

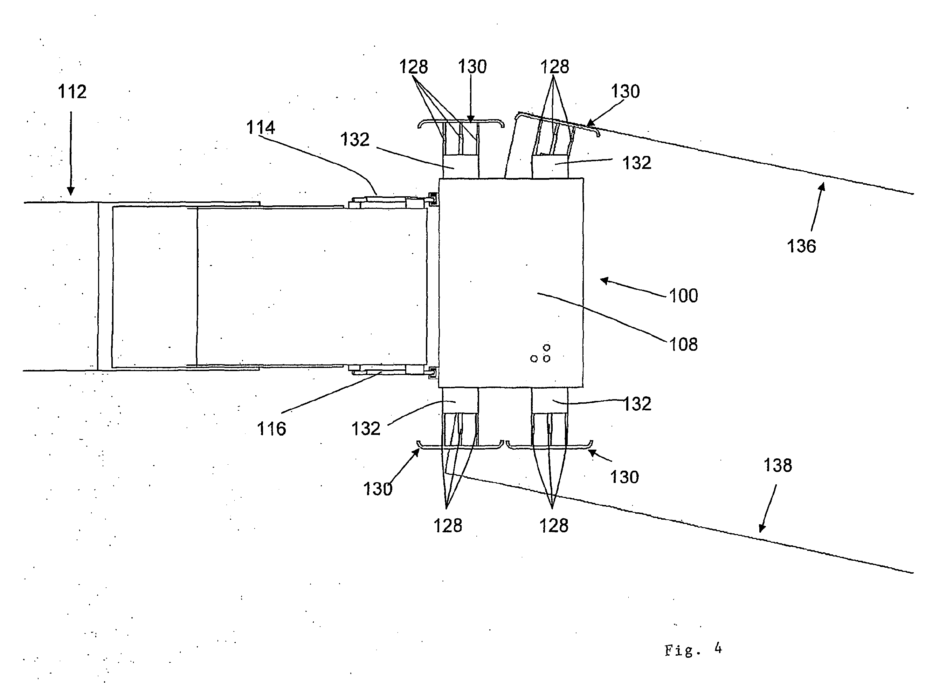

Im vorliegenden Beispiel weist die in Figur 1 gezeigte Ladehilfe 100 eine auf vier lenkbaren Rollen, von denen hier nur zwei mit dem Bezugszeichen 102 und 104 sichtbar sind, verfahrbare rechteckige Arbeitsplattform 108 für das Be- und Entladen von Containern auf. Die lenkbaren Rollen sind in einem Rechteck um die Arbeitsplattform 108 angeordnet. Die Arbeitsplattform 108 ist mittels einer Kupplung 110 mit dem vorderen Ende eines Teleskopförderbandes 112 verbunden. Die Kupplung 110 besteht aus zwei Hydraulikzylindern 114 und 116 (siehe Figur 4). Über diese Hydraulikzylinder 114 und 116 ist die linke Seite des Teleskopförderbandes 112 mit der linken Seite der Arbeitsplattform 108 und die rechte Seite des Teleskopförderbandes 112 mit der rechten Seite der Arbeitsplattform 108 verbunden. Die Hydraulikzylinder 114 und 116 sind vorzugsweise über Kugelköpfe (nicht gekennzeichnet) mit der Arbeitsplattform 108 und dem Teleskopförderband 112 verbunden, da dadurch eine Beweglichkeit in horizontaler und vertikaler Richtung ermöglicht wird.

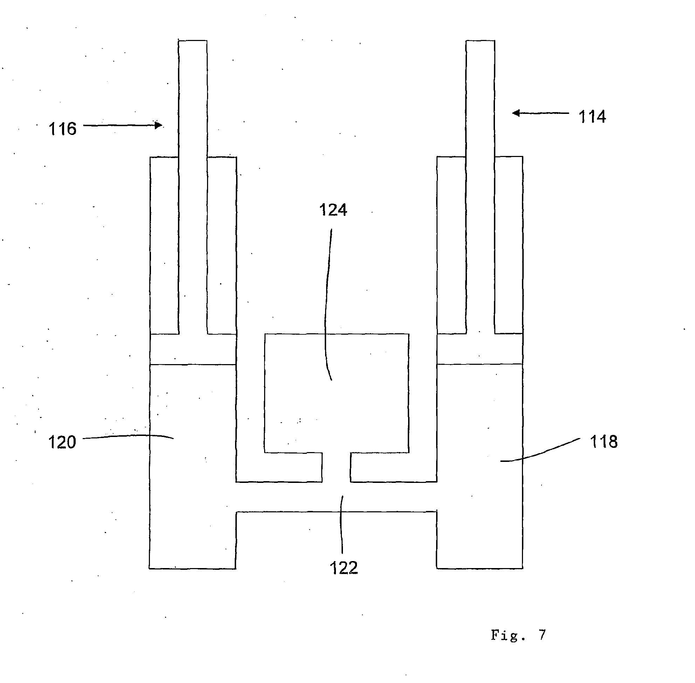

Kammern 118 und 120 der Hydraulikzylinder 114 und 116 sind über eine Verbindung 122 hydraulisch miteinander verbunden (siehe Figur 7).

Bei gleichmäßiger Belastung (im Geradeauslauf) sind die Hydraulikzylinder 114 und 116 gleichmäßig ausgefahren. Bei einem Lenkvorgang unterscheiden sich die auf die Hydraulikzylinder 114 und 116 wirkenden Kräfte. Beispielsweise bei einem Lenkvorgang nach links wird der Druck auf den linken Hydraulikzylinder 114 größer, so daß er zusammengepreßt wird. Dadurch fließt Hydrauliköl von dem linken Hydraulikzylinder 114 über die Verbindung 122 in den rechten Hydraulikzylinder 116. Dies wiederum bewirkt im eingelenkten Zustand eine gleichmäßige Kraftübertragung zwischen dem Teleskopförderband 112 und der Arbeitsplattform 108.

Über die Hydraulikzylinder 114 und 116 kann eine Übertragung der Kräfte für die Vor- und Rückbewegung von dem Teleskopförderband 112 an die Arbeitsplattform 108 ermöglicht werden. Ebenso kann eine Änderung der Orientierung zwischen feststehendem Teleskopförderband 112 und gelenkter Arbeitsplattform 108 realisiert werden.

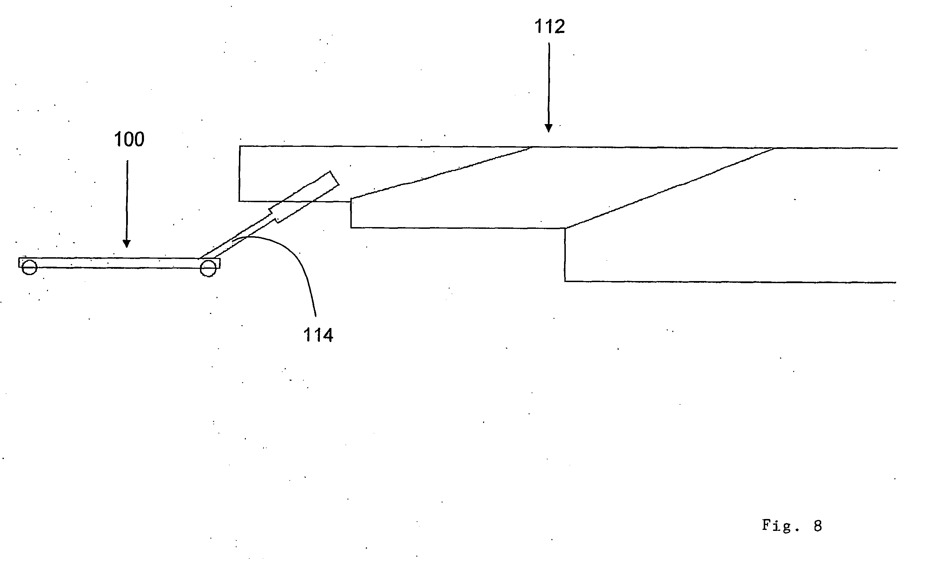

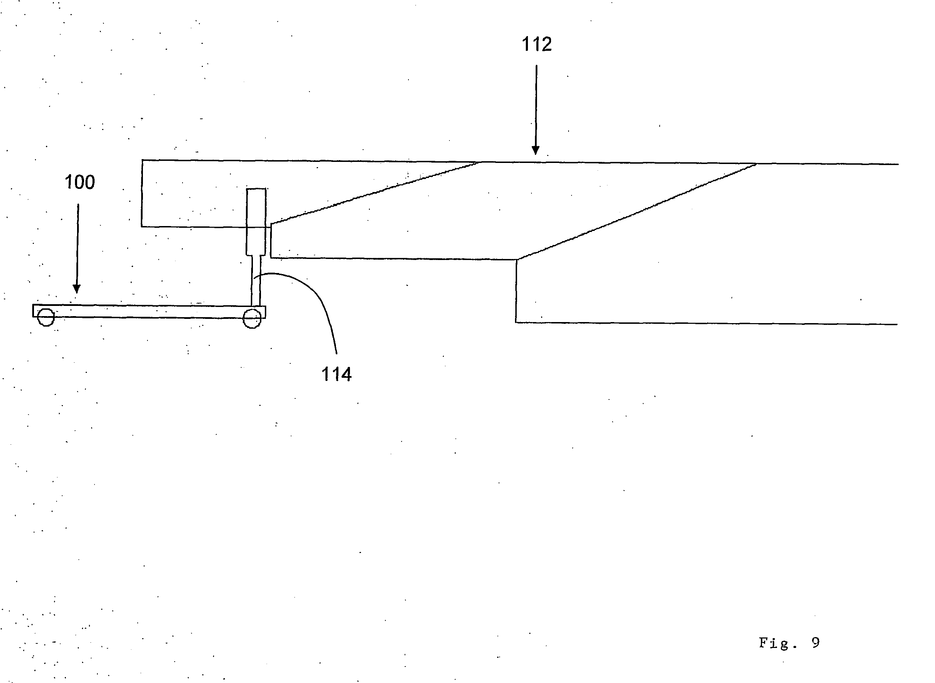

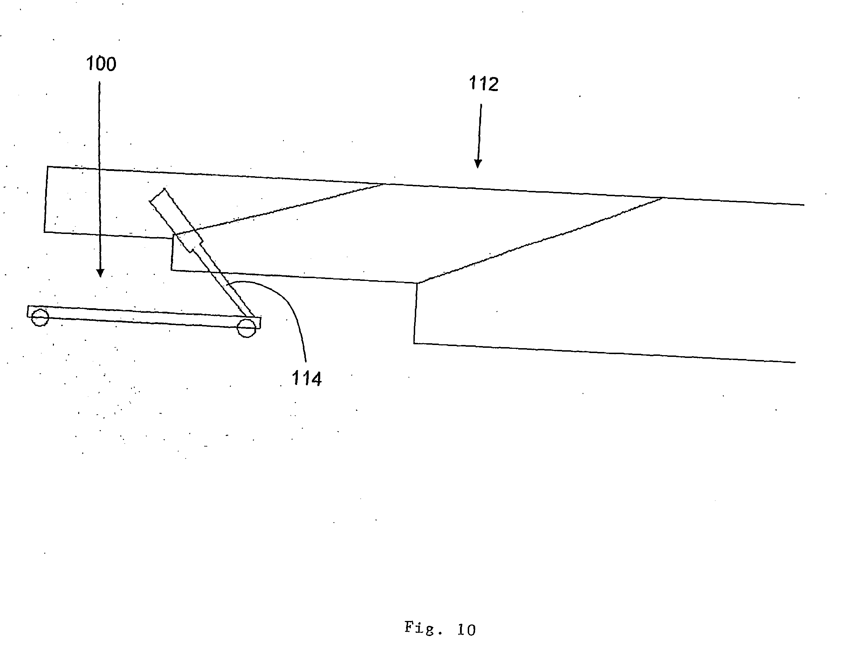

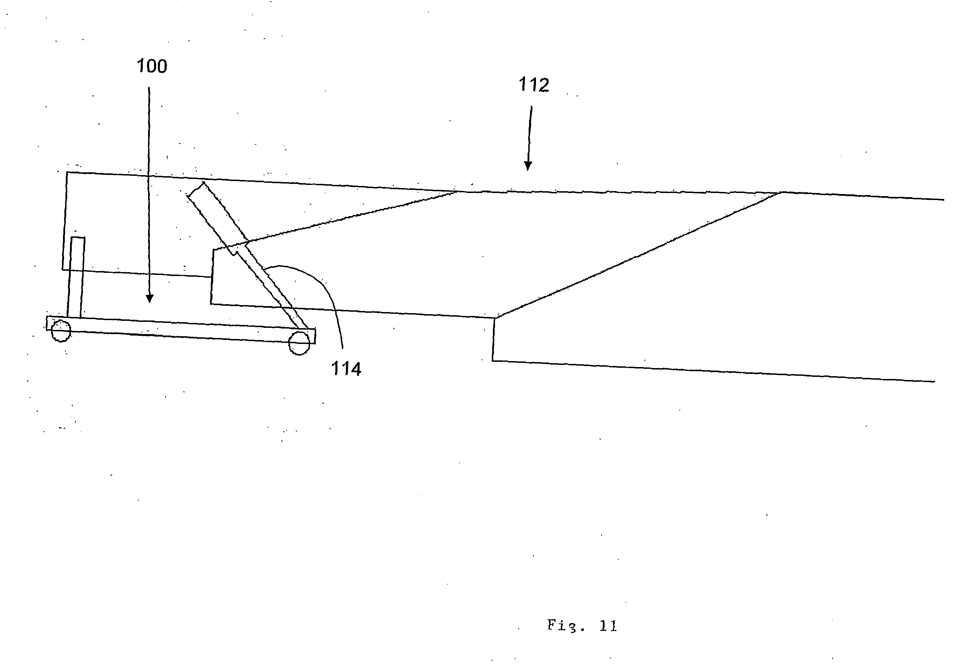

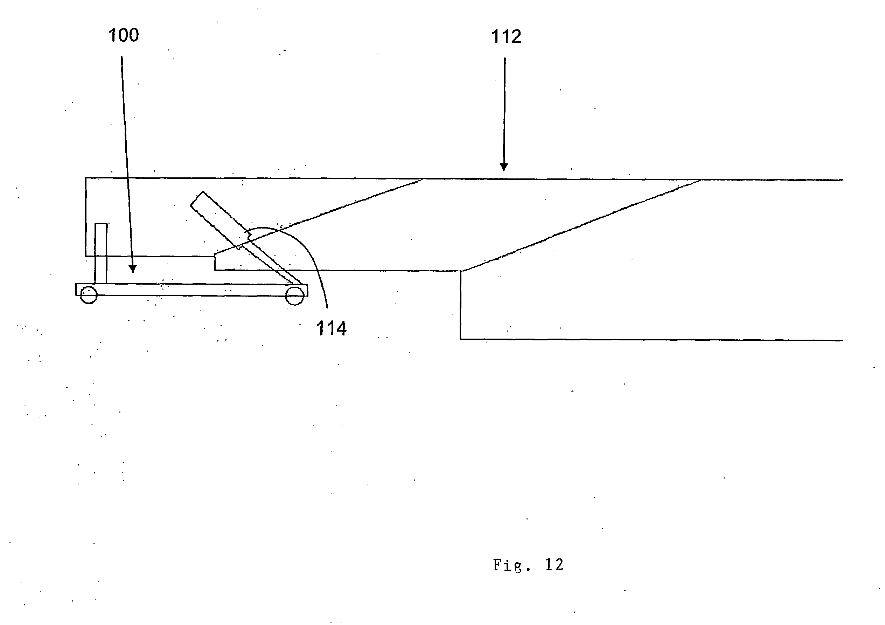

Zum Verstauen des Teleskopförderbandes 112 und zum Verstauen der Ladehilfe 100 (siehe Figuren 8 bis 12) werden die Hydraulikzylinder 114 und 116 verkürzt. Dazu wird Hydrauliköl aus den Hydraulikzylindern 114 und 116 in einen Ausgleichsbehälter 124 abgelassen. Die Position des Ausgleichsbehälters ist im Prinzip frei wählbar, da er nur über dünne hydraulische Verbindungen, wie Rohr oder Schlauch, angebunden werden muß. Eine vorteilhafte Position ist z. B. in der Nähe der hydraulischen Versorgung der Ladehilfe. Anstelle des Ausgleichsbehälters kann auch eine Pumpe vorgesehen sein, mittels derer Hydrauliköl aus den Hydraulikzylindern 114 und 116 abgelassen wird. Die Arbeitsplattform 108 wird dadurch unter das Teleskopförderband 112 gezogen bzw. geschoben. Die Hydraulikzylinder 114 und 116 stehen nun senkrecht zwischen der Oberkante der Arbeitsplattform 108 und der Unterkante des Teleskopförderbandes 112 (siehe Figur 9). Die Arbeitsplattform 108 wird nun weiter zurückgezogen; die Hydraulikzylinder 114 und 116 verlängern sich wieder und Hydrauliköl fließt aus dem Ausgleichsbehälter 124 in die Hydraulikzylinder 114 und 116 zurück (siehe Figur 10). Dadurch steht die hintere Kante der Arbeitsplattform 108 hinter der Vorderkante des Teleskopförderbandes 112. Nun werden sämtliche hydraulische Verbindungen geschlossen. Die Hydraulikzylinder 114 und 116 sind nun starr. Das Teleskopförderband 112 wird abgesenkt und die Arbeitsplattform 108 zieht sich weiter nach hinten (siehe Figur 11). Nun wird die Vorderseite der Arbeitsplattform 108 über eine Stange, ein Seil etc. (nicht gezeigt) mit der Vorderseite des Teleskopförderbandes 112 verbunden (siehe Figur 11). Das Teleskopförderband 112 kann jetzt mit der Arbeitsplattform 108 hochgefahren werden. Die Arbeitsplattform 108 wird angehoben und hängt nun unter dem Teleskopförderband 112 (siehe Figur 12). Um aus dieser Verstauposition wieder in die Arbeitsposition zu gelangen, wird umgekehrt verfahren. Der Verstauvorgang kann sowohl manuell als auch automatisch gesteuert erfolgen.

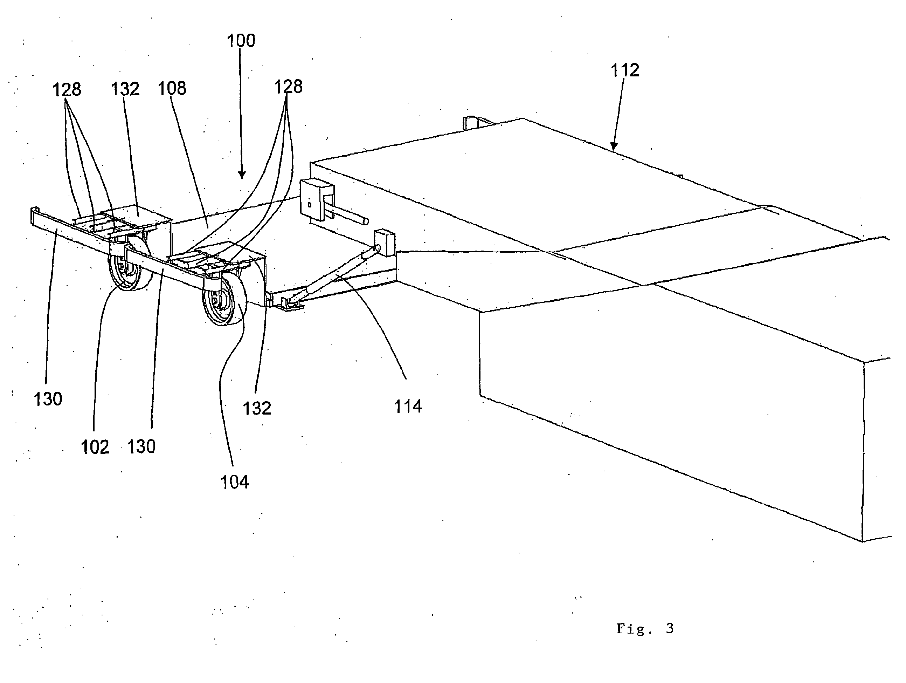

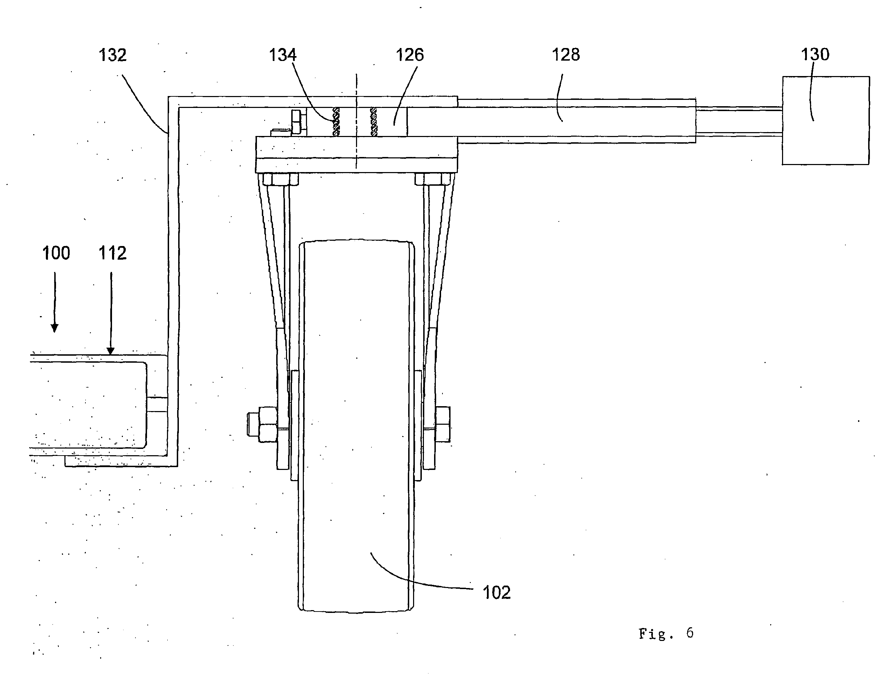

Wie sich anhand der Figuren 3 bis 6 ergibt, sind die lenkbaren Rollen 102 bzw. 104 an ihren jeweiligen Lenkachsen 126 über jeweils drei Hydraulikzylinder 128 mit einer jeweiligen Führungsschiene 130 verbunden. Im vorliegenden Fall ist die Lenkachse 126 über eine Halterung 132 mit der Arbeitsplattform 108 verbunden. Die Halterung 132 dient dazu, die Arbeitsplattform 108 weiter absenken zu können, um die Höhe des Gesamtaufbaus zu minimieren. Die Lenkachse kann aber ganz allgemein entweder ober- oder unterhalb der Arbeitsplattform 108 bzw. der Halterung 132 sein oder auch in Verlängerung der Achse einer Rolle.

Die lenkbaren Rollen 102 und 104 werden über eine jeweilige Feder 134 in einem Zustand ohne Berührung einer Wand eines Containers selbsttätig geradeaus gelenkt. Bei der Feder 134 handelt es sich um eine Spiralfeder, die um die Lenkachse 126 gebunden ist. Alternativ können auch Federn, Gasdruckzylinder, Gummibänder etc. zwischen dem nichtbeweglichen Teil des Gesamtsystems (Arbeitsplattform 108, Halterung 132) und den beweglichen Elementen der Lenkung (Führungsschiene etc.) genutzt werden.

Die Führungsschienen 130 sind an den Enden nach innen abgebogen, so daß eine Verkantung mit der Wand eines Containers nicht möglich ist.

Nachfolgend soll das Einfahren in einen Container und das Herausfahren aus selbigem beschrieben werden:

Bei der Einfahrt in einen Container mit seitlichen Wänden 136 und 138 sind die Hydraulikzylinder 128 und damit die Führungsschienen 130 soweit ausgefahren, daß die linken Führungsschienen 130 bei schräger Einfahrt in den Container die linke Wand 136 des Containers berühren. Diese Berührung wird über die Führungsschienen 130 und die Hydraulikzylinder 128 in eine Änderung der Fahrtrichtung von der linken Wand 136 des Containers weg umgesetzt. Die Rollen 102 und 104 erhalten durch die Führungsschienen 130 eine Führung und die gesamte Arbeitsplattform 108 wird parallel zur Wand 136 des Containers ausgerichtet. Jetzt kann eine problemlose Einfahrt in den gesamten Container erfolgen.

Wenn die Führungsschienen 130 die Wände 136 und 138 des Containers nicht berühren, werden die lenkbaren Rollen 102, 104 durch die Federn 134 auf Geradeausfahrt positioniert.

Die Arbeitsplattform 108 kann hydraulisch in der Höhe verstellt werden. Dabei ist eine möglichst flache Bauform angestrebt, um die Entladung in einem unteren Bereich eines Containers zu ermöglichen. Im hochgefahrenen Zustand ist die Entladung deckenhoch beladener Container problemlos möglich.

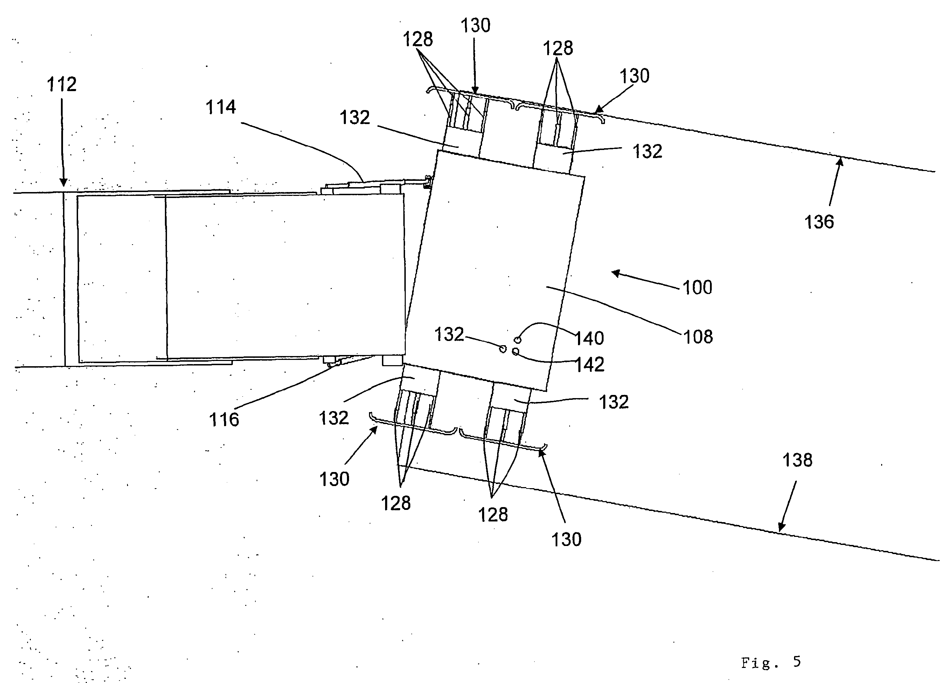

Die Höhenverstellung sowie die Vor- bzw. Rückwärtsfahrt können bequem und sicher über Fußtaster 140, 142 und 144 (siehe Figur 5) auf dem Boden der Arbeitsplattform 108 durchgeführt werden. Dies ermöglicht es, einen kompletten Lade- bzw. Entladevorgang durchzuführen, ohne die Arbeitsplattform 108 verlassen zu müssen.

Zumindest gemäß besonderen Ausführungsformen der Erfindung wird eine Ladehilfe geschaffen, die selbsttätig gelenkt wird, höhenverstellbar ist und mit einer speziellen Kupplung unter einer Teleskopfördereinrichtung, zum Beispiel einem Teleskopförderband, verstaut werden kann. Die Ladehilfe ermöglicht auf diese Weise eine bequeme Entladung in allen Bereichen eines Containers. Außerdem kann sie bei Nichtbenutzung mit dem gesamten Fördermittel verfahren werden. Der Antrieb der Ladehilfe erfolgt passiv, das heißt, daß die Ladehilfe mit dem Antrieb des vorhandenen Fördermittels bewegt wird.

Die in der vorliegenden Beschreibung sowie in den Zeichnungen offenbarten Merkmale der Erfindung können sowohl einzeln als auch in beliebigen Kombinationen für die Verwirklichung der Erfindung in ihren verschiedenen Ausführungsformen wesentlich sein.

## Patentansprüche

1. Ladehilfe (100) in Form einer auf mindestens drei Rollen, von denen mindestens eine (102;104) lenkbar ist, verfahrbaren Arbeitsplattform (108) für das Be- und Entladen von Containern, wobei eine selbsttätige mechanische Lenkeinrichtung zum Lenken der mindestens einen lenkbaren Rolle (102; 104) vorgesehen ist, mittels welcher die Arbeitsplattform (108) ohne Berührung einer Wand (136; 138) eines Containers selbsttätig geradeaus gelenkt wird und bei Berührung einer Wand eines Containers selbsttätig von der Wand weggelenkt wird, bis die Arbeitsptattform (108) parallel zur Wand (136) des Containers ausgerichtet ist,
und wobei
die Lenkeinrichtung mindestens einen mechanischen Berührungsdetektor zur Detektion der Berührung einer Wand eines Containers in Einfahrrichtung auf jeder Seite der Arbeitsplattform (108) aufweist, **dadurch gekennzeichnet, daß** der Berührungsdetektor so gestaltet ist, daß er bei Detektion einer Berührung einer Wand (136) eines Containers auf mechanischem Weg eine Änderung der Fahrtrichtung der Arbeitsplattform (108) von der Wand des Containers weg steuert, bis die Arbeitsplattform (108) parallel zur Wand (136) des Containers ausgerichtet ist

2. Ladehilfe (100) nach Anspruch 1, **dadurch gekennzeichnet, daß** der Berührungsdetektor mit der Lenkachse (126) einer lenkbaren Rolle (102; 104) mechanisch verbunden ist.

3. Ladehilfe (100) nach Anspruch 2, **dadurch gekennzeichnet, daß** die Arbeitsplattform (108) eine einzige lenkbare Rolle aufweist, die Lenkeinrichtung genau einen mechanischen Berührungsdetektor zur Detektion der Berührung einer Wand eines Containers in Einfahrrichtung auf jeder Seite der Arbeitsplattform (108) aufweist und jeder Berührungsdetektor mit der Lenkachse (126) der einzigen lenkbaren Rolle mechanisch verbunden ist

4. Ladehilfe (100) nach Anspruch 2, **dadurch gekennzeichnet, daß** die Arbeitsplattform (108) zwei in Einfahrrichtung seitlich nebeneinander im Abstand angeordnete lenkbare Rollen aufweist, deren jeweiligen Lenkachsen (126) mit einem jeweiligen zugehörigen Berührungsdetektor mechanisch verbunden sind.

5. Ladehilfe (100) nach einem der Ansprüche 2 bis 4, **dadurch gekennzeichnet, daß** der Berührungsdetektor eine sich im wesentlichen horizontal erstreckende kufenartige Führungsschiene (130) mit zur Arbeitsplattform (108) hin abgebogenen Enden umfaßt, die über eine sich horizontal erstreckende Befestigungseinrichtung mit der Lenkachse (126) einer jeweiligen zugehörigen lenkbaren Rolle (102; 104) verbunden ist.

6. Ladehilfe (100) nach Anspruch 5, **dadurch gekennzeichnet, daß** die Führungsschiene (130) mit mindestens einer Rolle versehen ist.

7. Ladahilfe (100) nach Ansprach 5 oder 6, **dadurch gekennzeichnet, daß** die Befestigungseinrichtung mindestens eine Stange oder ein Rohr umfaßt.

8. Ladehilfe (100) nach Anspruch 7, **dadurch gekennzeichnet, daß** die Stange bzw. das Rohr linear verstellbar ist

9. Ladehilfe (100) nach einem der vorangehenden Ansprache, **dadurch gekennzeichnet, daß** die bzw. wenigstens eine lenkbare Rolle durch eine Feder (134) in einem Zustand ohne Berührung einer Wand eines Containers selbsttätig geradeaus lenkbar ist.

10. Ladehilfe (100) nach, einem der Ansprüche 1 bis 8, **dadurch gekennzeichnet, daß** die bzw. mindestens eine lenkbare Rolle durch einen Gasdruckczylinder in einem Zustand ohne Berührung einer Wand eines Containers selbsttätig geradeaus lenkbar ist.

11. Ladehilfe (100) nach einem der vorangehenden Ansprüche, **dadurch gekennzeichnet, daß** die Arbeitsplattform (108) höhenverstellbar ist.

12. Ladehilfe (100) nach Anspruch 11, **dadurch gekennzeichnet, daß** die Arbeitsplattform (108) mittels eines Scherenhebergestänges höhenverstellbar ist.

13. Ladehilfe (100) nach einem der vorangehenden Ansprüche, **dadurch gekennzeichnet, daß** mindestens ein Fußtaster (140,142, 144) auf der Arbeitsplattform (108) vorgesehen ist.

14. Ladehilfe (100) nach einem der vorangehenden Ansprüche, **dadurch gekennzeichnet, daß** sie einen eigenen Antrieb aufweist.

15. Teleskopfördereinrichtung für Fördergut, insbesondere für Stückgut mit einem teleskopartigen Fördermittel zum Transport des Förderguts und einer damit verbundenen Ladehilfe (100) nach einem der vorangehenden Ansprüche.

16. Teleskopfördereinrichtung nach Anspruch 15, **dadurch gekennzeichnet, daß** die Ladehilfe (100) über eine Kupplung (110) mit dem Fördermittel verbunden ist.

17. Teleskopfördereinrichtung nach Anspruch 15 oder 16, **dadurch gekennzeichnet, daß** das Fördermittel ein Teleskopförderband (112) ist.

18. Teleskopfördereinrichtung nach Anspruch 16, **dadurch gekennzeichnet**, die Ladehilfe (100) mittels der Kupplung (110) aus einer Arbeitsposition, in der die Arbeitsplattform (108) an einem in Einfahrrichtung vorderen Ende des Teleskopförderbandes (112) verfahrbar angeordnet ist, in eine Verstauposition verbringbar ist, in der sich die Arbeitsplattform (108) im Bereich des vorderen Endes des Teleskopförderbandes (112) unterhalb desselben befindet.

19. Teteskopfördereinrichtung nach Anspruch 18, **dadurch gekennzeichnet, daß** die Arbeitsplattform (108) in der Verstauposition keinen Bodenkontakt aufweist.

## Claims

1. A loading aid (100) in the form of a working platform (108) that can be moved on at least three rollers, at least one of which (102; 104) can be steered, for loading and unloading containers, whereby an autonomous mechanical steering device is provided for steering the at least one steerable roller (102; 104), by means of which the working platform (108) is autonomously steered straight ahead without touching a wall (136; 138) of the container and, if it touches a wall of the container, it is autonomously steered away from the wall until the working platform (108) is aligned parallel to the wall (136) of the container, and whereby the steering device has at least one mechanical contact detector on each side of the working platform (108) for detecting contact with a wall of the container in the entry direction, **characterized in that** the contact detector is configured in such a way that, when it detects contact with a wall (136) of the container, it mechanically steers the working platform (108) away from the wall of the container by changing the direction of travel until the working platform (108) is aligned parallel to the wall (136) of the container.

2. The loading aid (100) according to Claim 1, **characterized in that** the contact detector is mechanically connected to the steering axle (126) of a steerable roller (102; 104).

3. The loading aid (100) according to Claim 2, **characterized in that** the working platform (108) has one single steerable roller, the steering device has exactly one mechanical contact detector on each side of the working platform (108) for detecting contact with a wall of the container in the entry direction, and each contact detector is mechanically connected to the steering axle (126) of the single steerable roller.

4. The loading aid (100) according to Claim 2, **characterized in that** the working platform (108) has two steerable rollers that are arranged in the entry direction next to each other at a distance from each other, and the steering axles (126) of said rollers are each mechanically connected to an appertaining contact detector.

5. The loading aid (100) according to any of Claims 2 to 4, **characterized in that** the contact detector comprises a runner-like guide rail (130) that extends essentially horizontally and that has ends bent towards the working platform (108), said ends being connected to the steering axle (126) of each associated steerable roller (102; 104) via a horizontally extending fastening device.

6. The loading aid (100) according to Claim 5, **characterized in that** the guide rail (130) is provided with at least one roller.

7. The loading aid (100) according to Claim 5 or 6, **characterized in that** the fastening device comprises at least one rod or pipe.

8. The loading aid (100) according to Claim 7, **characterized in that** the rod or the pipe can be moved linearly.

9. The loading aid (100) according to any of the preceding claims, **characterized in that** the one or the at least one steerable roller can be autonomously steered by means of a spring (134) straight ahead into a state where it does not make contact with a wall of the container.

10. The loading aid (100) according to any of Claims 1 to 8, **characterized in that** the one or the at least one steerable roller can be autonomously steered by means of a pressurized gas cylinder straight ahead into a state where it does not make contact with a wall of the container.

11. The loading aid (100) according to any of the preceding claims, **characterized in that** the height of the working platform (108) is adjustable.

12. The loading aid (100) according to Claim 11, **characterized in that** the height of the working platform (108) is adjustable by means of a scissor lift.

13. The loading aid (100) according to any of the preceding claims, **characterized in that** at least one foot switch (140, 142, 144) is provided on the working platform (108).

14. The loading aid (100) according to any of the preceding claims, **characterized in that** it has its own drive.

15. A telescopic conveying device for goods to be conveyed, in particular for piece goods, having a telescope-like conveying means for transporting the goods to be conveyed and an associated loading aid (100) according to any of the preceding claims.

16. The telescopic conveying device according to Claim 15, **characterized in that** the loading aid (100) is connected to the conveying means via a coupler (110).

17. The telescopic conveying device according to Claim 15 or 16, **characterized in that** the conveying means is a telescopic conveyor belt (112).

18. The telescopic conveying device according to Claim 16, **characterized in that** the loading aid (100) can be moved by means of the coupler (110) out of a working position, in which the working platform (108) is arranged movably on one end of the telescopic conveyor belt (112) at the front in the entry direction, into a stowed position , in which the working platform (108) is situated underneath the front end of the telescopic conveyor belt (112).

19. The telescopic conveying device according to Claim 18, **characterized in that** the working platform (108) is not touching the floor when it is in the stowed position.

## Revendications

1. Dispositif d'aide au chargement (100), se présentant sous la forme d'une plateforme de travail (108), pour le chargement et le déchargement de conteneurs, déplaçable sur au moins trois roues dont l'une au moins (102 ; 104) est orientable, un dispositif de direction mécanique automatique pour orienter l'au moins une roue orientable (102 ; 104) étant prévu, au moyen duquel la plateforme de travail (108) est dirigée automatiquement en ligne droite sans contact avec une paroi (136 ; 138) d'un conteneur et, en cas de contact avec une paroi d'un conteneur, est dirigée automatiquement de manière à s'écarter de la paroi jusqu'à ce que la plateforme de travail (108) soit orientée parallèlement à la paroi (136) du conteneur, et le dispositif de direction comportant, de chaque côté de la plateforme de travail (108), au moins un détecteur mécanique de contact pour détecter le contact avec une paroi d'un conteneur dans la direction d'entrée **caractérisé en ce que** le détecteur de contact est réalisé de manière telle que, à la détection d'un contact avec une paroi (136) d'un conteneur, il commande mécaniquement une modification du sens du déplacement de la plateforme de travail (108) pour l'écarter de la paroi du conteneur jusqu'à ce que la plateforme de travail (108) soit orientée parallèlement à la paroi (136) du conteneur.

2. Dispositif d'aide au chargement (100) selon la revendication 1, **caractérisé en ce que** le détecteur de contact est relié mécaniquement à l'essieu directeur (126) d'une roue orientable (102 ; 104).

3. Dispositif d'aide au chargement (100) selon la revendication 2, **caractérisé en ce que** la plateforme de travail (108) comporte une unique roue orientable, le dispositif de direction comporte exactement un détecteur mécanique de contact, de chaque côté de la plateforme de travail (108), pour la détection du contact avec une paroi d'un conteneur dans la direction d'entrée et chaque détecteur de contact est relié mécaniquement à l'essieu directeur (126) de l'unique roue orientable.

4. Dispositif d'aide au chargement (100) selon la revendication 2, **caractérisé en ce que** la plateforme de travail (108) comporte deux roues orientables disposées côte à côte latéralement dans la direction d'entrée avec un espace entre elles et dont les essieux directeurs (126) respectifs sont reliés mécaniquement à un détecteur de contact associé respectif.

5. Dispositif d'aide au chargement (100) selon l'une des revendications 2 à 4, **caractérisé en ce que** le détecteur de contact comprend un rail de guidage (130) en forme de patin et s'étendant sensiblement horizontalement, avec, en direction de la plateforme (108), des extrémités repliées, lequel rail est relié à l'essieu directeur (126) d'une roue orientable (102 ; 104) associée respective par l'intermédiaire d'un dispositif de fixation qui s'étend horizontalement.

6. Dispositif d'aide au chargement (100) selon la revendication 5, **caractérisé en ce que** le rail de guidage (130) est pourvu d'au moins une roue.

7. Dispositif d'aide au chargement (100) selon la revendication 5 ou 6, **caractérisé en ce que** le dispositif de fixation comprend au moins une tige ou un tube.

8. Dispositif d'aide au chargement (100) selon la revendication 7, **caractérisé en ce que** la tige ou le tube sont déplaçables linéairement.

9. Dispositif d'aide au chargement (100) selon l'une des revendications précédentes, **caractérisé en ce que** la roue orientable ou au moins une roue orientable peut être dirigée automatiquement en ligne droite par un ressort (134) dans un état sans contact avec une paroi d'un conteneur.

10. Dispositif d'aide au chargement (100) selon l'une des revendications 1 à 8, **caractérisé en ce que** la roue orientable ou au moins une roue orientable peut être dirigée automatiquement en ligne droite par un cylindre à gaz comprimé dans un état sans contact avec une paroi d'un conteneur.

11. Dispositif d'aide au chargement (100) selon l'une des revendications précédentes, **caractérisé en ce que** la plateforme de travail (108) est déplaçable en hauteur.

12. Dispositif d'aide au chargement (100) selon la revendication 11, **caractérisé en ce que** la plateforme de travail (108) est déplaçable en hauteur au moyen d'un ensemble de tiges formant un cric à parallélogramme articulé.

13. Dispositif d'aide au chargement (100) selon l'une des revendications précédentes, **caractérisé en ce qu'**au moins un manipulateur à pied (140, 142, 144) est prévu sur la plateforme de travail (108).

14. Dispositif d'aide au chargement (100) selon l'une des revendications précédentes, **caractérisé en ce qu'**il comporte un entraînement propre.

15. Dispositif télescopique pour marchandises à transporter, en particulier pour marchandises de détail, avec un moyen de transport télescopique pour le transport de la marchandise à transporter et un dispositif d'aide au chargement (100) selon l'une des revendications précédentes qui y est relié.

16. Dispositif télescopique selon la revendication 15, **caractérisé en ce que** le dispositif d'aide au chargement (100) est relié au moyen de transport (100) par l'intermédiaire d'un raccord (110) .

17. Dispositif télescopique selon la revendication 15 ou 16, **caractérisé en ce que** le moyen de transport est une bande transporteuse télescopique (112).

18. Dispositif télescopique selon la revendication 16, **caractérisé en ce que** le dispositif d'aide au chargement peut être déplacé, au moyen du raccord (110), d'une position de travail dans laquelle la plateforme de travail (108) est située, de manière déplaçable, à une extrémité avant de la bande transporteuse télescopique (112) dans la direction d'entrée à une position de rangement dans laquelle la plateforme de travail (108) se trouve dans la zone de l'extrémité avant de la bande transporteuse télescopique (112) en dessous de celle-ci.

19. Dispositif télescopique selon la revendication 18, **caractérisé en ce que** la plateforme de travail (108) ne présente pas de contact avec le sol dans la position de rangement.
